# EUROPÄISCHE PATENTSCHRIFT

(11) **EP 2 025 561 B1**
(45) Veröffentlichungstag und Bekanntmachung des Hinweises auf die Patenterteilung: **01.02.2012**
(21) Anmeldenummer: 08012204.7
(22) Anmeldetag: 07.07.2008
(51) Int. Cl.: B60R 21/02, B60R 21/00

(54) **Sicherheitseinrichtung für Schlafliegen in Fahrerhäusern von Nutzfahrzeugen**
Safety device for sleeping areas in driver cabs of commercial vehicles
Dispositif de sécurité pour couchages dans des cabines de conducteurs de véhicules utilitaires

(30) Priorität: 08.08.2007 DE 102007037457
(43) Veröffentlichungstag der Anmeldung: 18.02.2009
(73) Patentinhaber: MAN Truck & Bus AG, 80995 München (DE)
(72) Erfinder: Mederle, Günther, Dipl.-Ing., 85051 Ingolstadt (DE); Hauer, Thomas, 85244 Röhrmoos (DE)

(56) Entgegenhaltungen:
- WO-A-01/22850
- DE-C- 252 296
- DE-U1- 9 216 881
- DE-U1- 29 810 893
- FR-A- 2 525 885
- GB-A- 1 428 368
- US-A- 2 195 955
- US-A- 3 971 083

## Beschreibung

Die Erfindung betrifft eine Schlafliege für ein Nutzfahrzeugfahrerhaus nach dem Oberbegriff des Anspruchs 1.

Es ist allgemein bekannt, in Fahrerhäusern von Nutzfahrzeugen Schlafliegen einzubauen. In der Regel werden bis zu zwei Schlafliegen eingebaut. Diese Schlafliegen werden üblicher Weise hinter den Sitzen übereinander angeordnet. Sowohl das untere als auch das obere Bett können hochklappbar ausgeführt sein. Beide Betten müssen eine Sicherung besitzen, welche liegende Personen bzw. gegebenenfalls auf den Schlafliegen verstaute Güter, Gepäck oder dergleichen bei starken Bremsungen bzw. im Crashfall am Herausfallen hindern können.

Beispielsweise ist eine derartige Liegensicherung in Form eines Sicherungsbügels aus der gattungsbildenden DE 44 22 121 C1 bekannt, bei der die Rückhaltesicherung als einteiliger Sicherungsbügel ausgebildet ist, der zwischen einer Rückhalteposition und einer Ruheposition um eine zur Liegenoberfläche parallele Schwenkachse mittels eines Drehlagers an der Liege schwenkbar angeordnet ist. Diese Sicherungsbügel ragt sowohl in der Rückhalteposition als auch in seiner Ruheposition von dem Drehlager frei ab.

Ein im Wesentlichen vom Prinzip her ähnlicher Aufbau ist auch aus der DE 39 29 725 A1 bekannt.

Demgegenüber ist es Aufgabe der vorliegenden Erfindung, eine alternative Sicherheitseinrichtung für Schlafliegen in Fahrerhäusern von Nutzfahrzeugen zur Verfügung zu stellen, die bei baulich einfachem Aufbau und geringem Herstellungsaufwand eine besonders funktionssichere Abstützung in der Gebrauchsposition der Sicherungseinrichtung ermöglicht.

Diese Aufgabe wird gelöst mit den Merkmalen des Patentanspruchs 1. Vorteilhafte Ausgestaltungen der Erfindung sind Gegenstand der Unteransprüche.

Gemäß Anspruch 1 liegt das Sicherungselement mit einer Sicherungselement-Anlagefläche in einer flächigen Anlageverbindung an einer Bettrahmen-Anlagefläche eines Bettrahmens der Schlafliege an und ist dort gehaltert, so dass sich das Sicherungselement bei einer Kraftbeaufschlagung flächig an dem Bettrahmen abstützt.

Mit einer derartigen flächigen Abstützung wird eine besonders vorteilhafte Rückhaltefunktion im Falle einer Kraftbeaufschlagung des Sicherungselementes durch eine Person oder durch Gepäckstücke bzw. andere Bauteile zur Verfügung gestellt, da mittels der flächigen Anlageverbindung eine vorteilhafte Krafteinleitung und Momentenabstützung in bzw. an dem stabilen Bettrahmen möglich ist.

Besonders bevorzugt ist ein Sicherungselement vorgesehen, welches den Bettrahmen wenigstens bereichsweise formschlüssig umgreift, insbesondere U-förmig umgreift, so dass z. B. die U-Basis bzw. auch die U-Schenkel mit ihrer dem Bettrahmen zugeordneten Seite die Sicherungselement-Anlageflächen ausbilden können. Mit einer derartigen Umgreifung des Bettrahmens bzw. eines entsprechenden Rahmenprofilbereichs wird eine einfache und vorteilhafte Ausbildung der flächigen Anlageverbindung möglich, so dass darüber eine gewünschte Abstützung auch von großen auftretenden Kräften bzw. Momenten zuverlässig möglich wird.

Besonders bevorzugt ist das Sicherungselement im Bereich wenigstens eines U-Schenkels lösbar mit dem Bettrahmen verbunden, wobei diese lösbare Verbindung bevorzugt durch eine Nut-Feder-Verbindung und/oder eine Schraub-, Splint- oder Rastverbindung hergestellt ist. Derartige Verbindungen sind besonders einfach herstellbar und erlauben eine funktionssichere Festlegung des Sicherungselementes am Bettrahmen.

Gemäß einer besonders bevorzugten konkreten Ausgestaltung ist vorgesehen, dass am im montierten Zustand des Bettrahmens im Fahrzeug in Hochachsenrichtung gesehen oberen Bettrahmenende eine Nut-Feder-Verbindung zwischen dem Bettrahmen und einem diesem oberen Bettrahmenende zugeordneten oberen U-Schenkel des Sicherungselementes vorgesehen ist. Konkret greift hierbei der am freien U-Schenkelende bevorzugt nach außen hin abgerundete Rasthaken in eine bettrahmenseitige Rastnut ein, insbesondere formschlüssig ein. Mit einer derartigen Ausgestaltung werden folgende Vorteile erzielt:
Erstens kann mit einer derartigen Rasthakenausbildung ein einfaches Einhängen und Abklappen des Sicherungselementes erfolgen, das somit vom Bediener einfach und übersichtlich am Bettrahmen montiert werden kann.

Zweitens wird mit dem abgerundeten Rasthaken gleichzeitig ein abgerundeter Bereich in einem solchen bettrahmenseitigen Bereich zur Verfügung gestellt, der sich relativ nah an einer z. B. auf der Schlafliege liegenden Person befindet, so dass hierdurch durch den abgerundeten Bereich eine aufprallweiche Kontur zur Verfügung gestellt wird. Damit kann somit in einer vorteilhaften Doppelfunktion durch die "Rundung" des freien U-Schenkelendes in einer vorteilhaften Doppelfunktion gleichzeitig ein Rasthaken zum Eingriff in eine entsprechende bettrahmenseitige Rastnut sowie eine aufprallweiche Struktur ausgebildet werden.

Besonders bevorzugt wird in Verbindung mit einer derartigen konkreten Ausgestaltung, wie sie eben beschrieben worden ist, am im montierten Zustand des Bettrahmens, in Hochachsenrichtung gesehen unteren Bettrahmenende gleichzeitig eine lösbare Schraubverbindung zwischen dem Bettrahmen und einem diesen unteren Bettrahmenende zugeordneten unteren U-Schenkel vorgesehen, mittels der dann das Sicherungselement auf der gegenüberliegenden Seite der Nut-Feder-Verbindung funktionssicher festgelegt werden kann, und zwar bevorzugt in Verbindung mit einer formschlüssigen und flächigen Anlage des unteren U-Schenkels am unteren Bettrahmenende. Mit einer derartigen Schraubverbindung wird zudem in zuverlässiger Weise eine Sicherung gegen axiales Verschieben des Sicherungselementes entlang des Bettrahmens zur Verfügung gestellt. Bevorzugt sind hier in Bettrahmenlängsrichtung als Axialrichtung mehrere derartiger Schraubverbindungen vorgesehen. Die Schraubverbindung selbst kann eine Durchschraubverbindung in den Bettrahmen hinein sein. Alternativ dazu können aber auch Klemmschrauben oder dergleichen als Schraubverbindungen vorgesehen sein. Als gleichwirkende Befestigungsmaßnahme werden ferner auch Rastverbindungen oder Sicherungssplintanordnungen gesehen.

Gemäß einer weiteren konkreten Ausgestaltung kann vorgesehen sein, dass das Sicherungselement im montierten Zustand mit einer in Hochachsenrichtung gesehen oberen und unteren Anlagefläche am Bettrahmen flächig anliegt, das heißt, dass die beiden sicherungselementseitigen Anlageflächen in Hochachsenrichtung voneinander beabstandet sind und zwar durch eine zwischen diesen beiden ausgebildete sicherungselementseitige Ausnehmung bzw. Aussparung. Konkret kann hierbei weiter vorgesehen sein, dass die untere Anlagefläche im Wesentlichen einen in Hochachsenrichtung unteren Eckrandbereich des Bettrahmens formschlüssig umgreift, während sich die obere Anlagefläche bevorzugt im Wesentlichen an einer vertikalen Seitenwand als Anlagefläche des Bettrahmens flächig abstützt. Hierdurch wird eine besonders vorteilhafte Krafteinleitung und Momentenabstützung im besonders kritischen unteren Eckrandbereich eines Bettrahmens möglich.

Gemäß einer weiteren besonders bevorzugten Ausgestaltung der vorliegenden Erfindung ist das Sicherungselement mehrteilig ausgebildet und weist wenigstens ein mit dem Bettrahmen verbindbares Halteprofil sowie einen wiederum mit dem Halteprofil verbindbaren Sicherungsbügel auf. Eine derartige Mehrteiligkeit ist z. B. dann von Vorteil, wenn bezogen auf die jeweils gewünschte Abstützfunktion mehrere unterschiedliche Sicherungsbügelarten bzw. -größen vorgesehen sind, die z. B. Bestandteil eines Sets bilden können. Des weiteren wird mit einem derartigen mehrteiligen System auch erreicht, dass der Sicherungsbügel auf einfache Weise vom Halteprofil gelöst werden kann, so dass dieses, wenig störend, am Bettrahmen verbleibt und der Sicherungsbügel bei Bedarf jederzeit wieder auf einfache Weise eingesetzt werden kann.

Konkret weist ein derartiges Halteprofil gemäß einer besonders bevorzugten Ausgestaltung einen in etwa U-förmigen Querschnitt auf, in dem der Sicherungsbügel lösbar gehaltert aufgenommen ist. Die Aufnahme des Sicherungsbügels im Halteprofil erfolgt dabei bevorzugt mittels einer formschlüssigen Schiebeführung, z. B. in der Art einer Schwalbenschwanzführung, das heißt mit Hinterschneidungen und Führungsnuten oder dergleichen, um ein stets funktionssicheres Einschieben und Einbringen des Sicherungsbügels in das Halteprofil zu erreichen bzw. eine auf einfache Weise vom Bediener erkennbare Zuordnung der beiden Bauteile zueinander sicherzustellen.

Um den Sicherungsbügel gegen ein Wandern bzw. Verschieben in Längs- bzw. Axialrichtung zu sichern, ist aufgrund der fehlenden großen Kraftbeaufschlagung in diese Axialrichtung lediglich eine einfache Abstützung erforderlich. Diese kann z. B. über einen Klemmschluss erfolgen bzw. auch alternativ oder zusätzlich über halteprofilseitige Anschläge. Zum Einschieben weist das Halteprofil bevorzugt auf einer Seite oder auf beiden Seiten eine stirnseitige Einschiebeöffnung auf, die beispielsweise mittels einer Abdeckkappe verschließbar ist. Der Sicherungsbügel ist bevorzugt selbst so ausgebildet, dass dieser im eingesetzten Zustand mit seinen in Axialrichtung liegenden Stirnseiten, das heißt in Halteprofillängsrichtung gesehen an halteprofilseitigen Anschlägen bzw. Stirnseiten anliegt. Damit ist insbesondere auch ein klapperfreier Aufbau sichergestellt.

Grundsätzlich können an einem derartigen Bettrahmen mehrere derartiger Sicherungselemente angeordnet sein. Aus bauteiltechnischen bzw. auch aus platztechnischen Gründen ist jedoch die Anordnung eines einzigen Sicherungselementes bevorzugt, das sich beispielsweise in etwa über 1/3 der Gesamtlänge des zugeordneten Bettrahmenbereichs erstreckt.

Der Bettrahmen selbst ist bevorzugt durch einen Profilrahmen gebildet, bevorzugt aus Leichtmetall oder Kunststoff. Auch das Sicherungselement selbst ist bevorzugt aus einem Leichtmetall oder einem Kunststoffmaterial hergestellt. Derartige Bauteile sind einfach im Spritzgussverfahren herzustellen, wobei zudem auch mittels einem derartigen Spritzgussverfahren auf einfache Weise Hinterschneidungen und/oder Umgriffe realisiert werden können.

Die Erfindung wird nachfolgend anhand einer Zeichnung näher erläutert.

Es zeigen:
- Fig. 1: schematisch eine perspektivische Draufsicht auf eine Schlafliege in einem Fahrerhaus eines Nutzfahrzeuges mit einer erfindungsgemäßen Sicherheitseinrichtung, und
- Fig. 2: einen schematischen Querschnitt durch das erfindungsgemäße Sicherungselement.

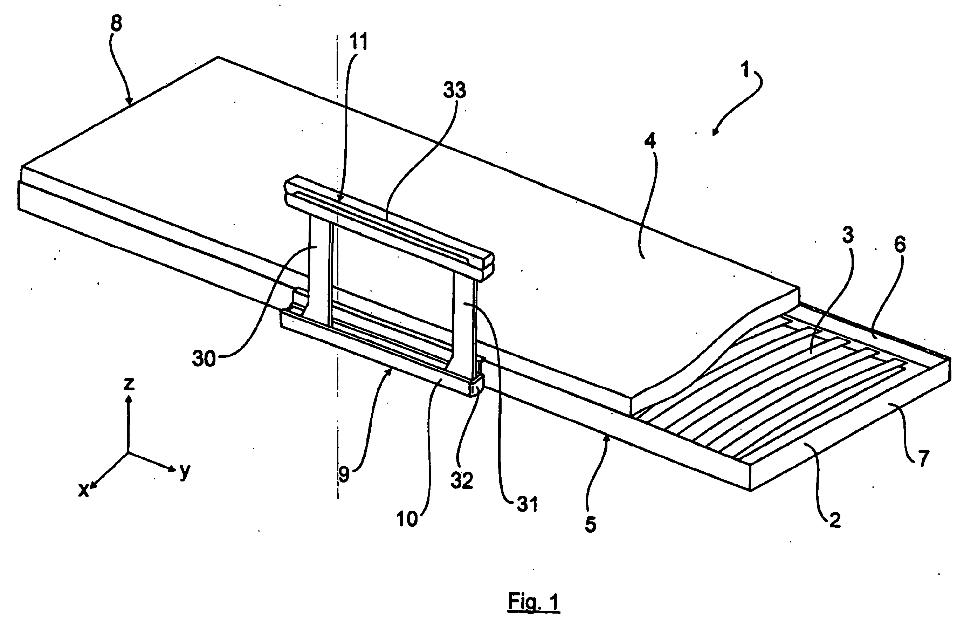

In der Fig. 1 ist schematisch und perspektivisch eine Schlafliege 1 dargestellt, die einen Bettrahmen 2 aufweist, der in seinem Inneren einen Lattenrost 3 trägt, auf dem wiederum eine Matratze 4 aufliegt. Der Bettrahmen selbst besteht aus einem vorderen Längsrahmenprofil 5, einem hinteren Längsrahmenprofil 6, sowie zwei stirnseitigen Rahmenprofilen 7, 8.

Über das hintere Längsrahmenprofil 6 kann die Schlafliege 1 klappbar am Fahrzeugaufbau angelenkt sein, was hier jedoch nicht dargestellt ist.

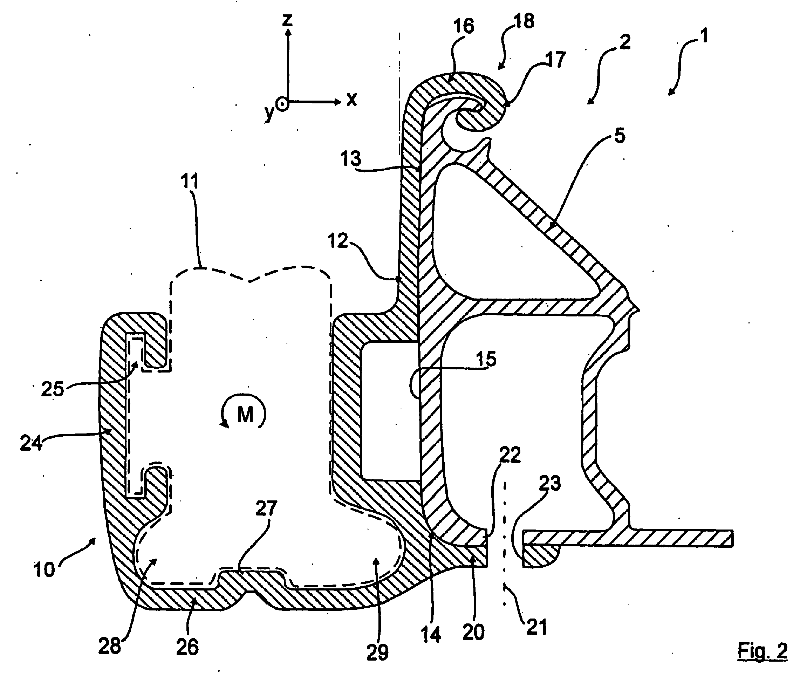

Wie dies insbesondere auch aus der Fig. 2 hervorgeht, ist am vorderen Längsrahmenprofil 5, und zwar in einem mittleren Bereich desselben ein Sicherungselement 9 angeordnet, das hier im konkreten Beispielfall zweiteilig aus einem mit dem vorderen Längsrahmenprofil 5 des Bettrahmens 2 verbundenen Halteprofil 10 und einem wiederum mit dem Halteprofil verbindbaren Sicherungsbügel 11 besteht.

Wie dies insbesondere der Fig. 2 zu entnehmen ist, weist das Halteprofil 10 einen in etwa U-förmigen Querschnitt auf, dessen in der Bildebene der Fig. 2 rechter U-Schenkel 12 mit seiner hutförmigen Formgebung im Wesentlichen eine obere Anlagefläche 13 sowie eine untere Anlagefläche 14 ausbildet, die in einer formschlüssigen bzw. flächigen Anlageverbindung an einer entsprechenden bettrahmenseitigen Anlagefläche 15 anliegen.

Konkret umgreift hier der ebenfalls einen im Wesentlichen einen U-förmigen Querschnitt aufweisende rechte U-Schenkel 12 das vordere Längsrahmenprofil 5 des Bettrahmens 2 somit im Wesentlichen formschlüssig in einer flächigen Anlageverbindung, wobei ein oberer U-Schenkel 16 des Halteprofils 10 am freien U-Schenkelende einen nach außen hin abgerundeten Rasthaken 17 ausbildet, der zur Ausbildung einer Nut-Feder-Verbindung 18 in eine längsrahmenprofilseitige Rastnut 19 eingreift. Auf der in Hochachsenrichtung gegenüberliegenden unteren Längsrahmenprofilseite umgreift das Halteprofil 10 das Längsrahmenprofil 5 mit einem zweiten, unteren U-Schenkel 20, der in einer flächigen Anlageverbindung am Längsrahmenprofil 5 anliegt.

Dieser U-Schenkel 20 ist zur Axialsicherung in die Bildebene hinein beispielsweise mit einer hier nicht im Detail dargestellten Verschraubung fixiert, wobei in Längsachsenrichtung, das heißt in die Bildebene hinein und heraus mehrere derartiger Verschraubungen 21 beabstandet voneinander vorgesehen sein können.

Mit einer derartigen Nut-Feder-Verbindung 18 einerseits und Verschraubung 21 andererseits kann das Halteprofil 10 auf einfache Weise im Rahmen der Montage am oberen Ende in die Rastnut 19 des Längsrahmenprofils 5 eingehängt werden und dann anschließend nach unten abgeklappt werden, bis die Verschraubungslöcher 22, 23 miteinander fluchten, so dass dann über die Verschraubung die flächige Abstützung und Anlageverbindung zwischen dem Halteprofil 10 und dem Bettrahmen 2 bzw. dem vorderen Längsrahmenprofil 5 hergestellt ist.

Das Halteprofil 10 selbst weist an dem linken U-Schenkel 24 innenwandseitig eine in der Art einer Schwalbenschwanzführung ausgebildete Hinterschneidung 25 auf. Ferner ist an der Innenseite der U-Basis 26 in etwa in einem mittleren Bereich eine rastnasenartige Rastschiene 27 sowie in Verbindung mit dem linken U-Schenkel 24 bzw. dem rechten U-Schenkel 12 jeweils zu beiden Seiten dieser Rastschiene 27 jeweils ein weiterer Hinterschneidungsbereich 28, 29 ausgebildet. Wie dies in der Fig. 2 lediglich strichliert dargestellt ist, weist der Sicherungsbügel 11, der ebenfalls eine U-Form aufweist, an seinen beiden U-Schenkeln 30, 31 jeweils eine entsprechend komplementäre Formgebung auf, so dass der Sicherungsbügel 11 bei abgehobenem stirnseitigen Deckel 32 des Halteprofils 10 form- und kraftschlüssig in das Halteprofil 10 eingeschoben werden kann. Anschließend wird dann der Deckel 32 wieder aufgesetzt, wobei der Sicherungsbügel 11 bevorzugt, z. B. durch Anschläge, in Axialrichtung y des Halteprofils 10 axial gesichert ist.

Mit einem derartigen erfindungsgemäßen Sicherungselement wird eine vorteilhafte Kraft- und Momentenabstützung über den Bettrahmen 2 möglich, z. B. im Falle einer Krafteinwirkung auf den Sicherungsbügel 11 im Bereich seiner U-Schenkel 30, 31 bzw. seiner U-Basis 33, da, wie dies in der Fig. 2 schematisch durch den Momentenpfeil M eingezeichnet ist, über die obere Anlagefläche 13 und insbesondere über die untere Anlagefläche 14 eine flächige Abstützung und Krafteinleitung am bzw. in den Bettrahmen 2 hinein erfolgen kann.

Wie dies insbesondere der Fig. 2 zu entnehmen ist, kann der Bettrahmen 2 als Hohlprofilrahmen ausgebildet sein, mittels dem eine besonders vorteilhafte Krafteinleitung und Momentenabstützung in zuverlässiger Weise möglich ist. Zudem ist ein derartiges Profil, ebenso wie das Halteprofil 10 und der Sicherungsbügel 11, aus einem Kunststoffmaterial auf preisgünstige Weise herstellbar, vorzugsweise im Spritzgussverfahren.

Für einen weichen Aufprall kann der Sicherungsbügel 11 zudem gepolstert sein, was jedoch in der Fig. 1 nicht im Detail dargestellt ist.

## Patentansprüche

1. Schlafliege **für ein Nutzfahrzeugfahrerhaus** mit einer Sicherheitseinrichtung, die
über ein an der Schlafliege anordenbares Sicherungselement verfügt, das in seiner Gebrauchsposition eine Rückhalte- und / oder Herausfallsicherung für auf der Schlafliege liegende Personen oder Gegenstände ausbildet,
**dadurch gekennzeichnet,**
**dass** das Sicherungselement (9) mit einer Sicherungselement-Anlagefläche (13, 14) in einer flächigen Anlageverbindung an einer Bettrahmen-Anlagefläche (15) eines Bettrahmens (2) der Schlafliege (1) anliegt und dort gehaltert ist, so dass sich das Sicherungselement (9) bei einer Kraftbeaufschlagung flächig an dem Bettrahmen (2) abstützt.

2. Schlafliege nach Anspruch 1, **dadurch gekennzeichnet, dass** das Sicherungselement (9) den Bettrahmen (2) wenigstens bereichsweise formschlüssig umgreift.

3. Schlafliege nach Anspruch 2, **dadurch gekennzeichnet, dass** das Sicherungselement (9) den Bettrahmen (2) U-förmig umgreift.

4. Schlafliege nach Anspruch 3, **dadurch gekennzeichnet, dass** die U-Basis und/oder die U-Schenkel (16, 20) mit ihrer dem Bettrahmen (2) zugeordneten Seite die Sicherungselement-Anlagefläche (13, 14) ausbildet oder ausbilden.

5. Schlafliege nach Anspruch 3 oder Anspruch 4, **dadurch gekennzeichnet, dass** das Sicherungselement (9) im Bereich wenigstens eines U-Schenkels (16) mit dem Bettrahmen (2) verbunden ist.

6. Schlafliege nach Anspruch 5, **dadurch gekennzeichnet, dass** einer oder beide U-Schenkel (16, 20) mit dem Bettrahmen (2) mittels einer Nut-Feder-Verbindung (18) verbunden sind und/oder das einer oder beide U-Schenkel (16, 20) mit dem Bettrahmen (2) mittels einer Schraub- und/oder Splint- und/oder Rastverbindung (21) verbunden ist.

7. Schlafliege nach Anspruch 6, **dadurch gekennzeichnet, dass** am im montierten Zustand des Bettrahmens (2) oberen Bettrahmenende eine Nut-Feder-Verbindung (18) zwischen dem Bettrahmen (2) und einem diesem oberen Bettrahmenende zugeordneten oberen U-Schenkel (16) vorgesehen ist dergestalt,
dass der am freien U-Schenkelende einen bevorzugt nach außen hin abgerundeten Rasthaken (17) aufweisende obere U-Schenkel (16) mit diesem Rasthaken (17) in eine bettrahmenseitige Rastnut (19) eingreift, insbesondere formschlüssig eingreift.

8. Schlafliege nach Anspruch 6 oder Anspruch 7, **dadurch gekennzeichnet, dass** am im montierten Zustand des Bettrahmens (2) unteren Bettrahmenende eine lösbare Schraubverbindung (21) oder Sicherungssplintverbindung oder Rastverbindung zwischen den Bettrahmen (2) und einem diesen unteren Bettrahmenende zugeordneten unteren U-Schenkel (20) vorgesehen ist, wobei der untere U-Schenkel (20) formschlüssig und flächig am unteren Bettrahmenende anliegt.

9. Schlafliege nach einem der Ansprüche 1 bis 8, **dadurch gekennzeichnet, dass** das Sicherungselement im montierten Zustand mit einer in Hochachsenrichtung gesehen oberen und unteren Anlagefläche (13, 14) am Bettrahmen (2) flächig anliegt,
dass die beiden sicherungselementseitigen Anlagenflächen (13, 14) in Hochachsenrichtung voneinander beabstandet sind dergestalt,
dass die unteren Anlagefläche (14) im Wesentlichen einen in Hochachsenrichtung unteren Eckrandbereich des Bettrahmens formschlüssig umgreift, während sich die obere Anlagefläche (13) bevorzugt im Wesentlichen an einer vertikalen Seitenwand als Anlagefläche des Bettrahmens (2) flächig abstützt.

10. Schlafliege nach Anspruch 9, **dadurch gekennzeichnet, dass** der Spaltabstand zwischen der oberen und unteren Anlagefläche (13, 14) durch eine sicherungselementseitige Aussparung gebildet ist.

11. Schlafliege nach einem der Ansprüche 1 bis 10, **dadurch gekennzeichnet, dass** das Sicherungselement (9) mehrteilig ausgebildet ist und wenigstens ein mit dem Bettrahmen (2) mit der flächigen Anlageverbindung verbindbares Halteprofil (10) sowie eine mit dem Halteprofil (10) verbindbaren Sicherungsbügel (11) aufweist.

12. Schlafliege nach Anspruch 11, **dadurch gekennzeichnet, dass** das Halteprofil (10) einen in U-förmigen Querschnitt aufweist, in dem der Sicherungsbügel (11) lösbar gehaltert, insbesondere mit einer formschlüssigen Schiebeführung, aufgenommen ist.

13. Schlafliege nach Anspruch 12, **dadurch gekennzeichnet, dass** der im montierten zustand des Halteprofils (10) dem Bettrahmen (2) zugeordnete Halteprofil-U-Schenkel an seiner Außenwand die Sicherheitselement-Anlagefläche ausbildet, und
dass das Halteprofil (10) an wenigstens einem Teil seiner Innenwände Rast- und/oder Kraftschluss- und/oder Formschlusselemente (25, 28, 29) aufweist, mittels denen der Sicherheitsbügel (11) im Halteprofil (10) verrastbar und/oder kraftschlüssig und/oder formschlüssig aufgenommen und gehaltert ist.

14. Schlafliege nach Anspruch 13, **dadurch gekennzeichnet, dass** Schwalbenschwanzführungen und/oder Nut-Feder-Verbindungen zur Halterung und zum Einschieben des Sicherungsbügels (11) vorgesehen sind.

15. Schlafliege nach einem der Ansprüche 11 bis 14, **dadurch gekennzeichnet, dass** Mittel vorgesehen sind, mittels denen der Sicherungsbügel (11) gegen Verschiebung in Längs- bzw. Axialrichtung gesichert ist, insbesondere durch Anschläge und/oder Befestigungsmittel.

16. Schlafliege nach einem der Ansprüche 11 bis 15, **dadurch gekennzeichnet, dass** der Sicherungsbügel (11) eine U-Form aufweist und mit den beiden freien U-Schenkelenden (30, 31) in dem Halteprofil (10) aufgenommen ist.

17. Schlafliege nach Anspruch 15 oder Anspruch 16, **dadurch gekennzeichnet, dass** das Halteprofil (10) ein- oder beidseitig offen ausgebildet ist für ein stirnseitiges Einschieben des Sicherungsbügels (11), wobei die offene Stirnseite vorzugsweise mittels eines Abdeckelements (32) lösbar verschließbar ist.

18. Schlafliege nach einem der Ansprüche 1 bis 17, **dadurch gekennzeichnet, dass** sich das Sicherungselement (9) in etwa über die Hälfte bis zu einem Viertel der Gesamtlänge des zugeordneten Bettrahmenbereichs (5) erstreckt.

19. Schlafliege nach einem der Ansprüche 1 bis 18, **dadurch gekennzeichnet, dass** der Bettrahmen (2) durch einen Profilrahmen ausgebildet ist und der dem Sicherungselement zugeordnete Bereich durch ein dem Fahrgastraum zugewandtes vorderes Rahmenprofil (5) gebildet ist.

20. Schlafliege nach einem der Ansprüche 1 bis 19, **dadurch gekennzeichnet, dass** das Sicherungselement (9) und/oder der Bettrahmen (2) aus Leichtmetall oder Kunststoff, insbesondere im Spritzgussverfahren hergestellt sind.

## Claims

1. Bunk for a driver's cab of a commercial vehicle, with a safety device which has a securing element which can be arranged on the bunk and, in its use position, forms a retaining and/or drop-off safety device for people or objects located on the bunk, **characterized in that** the securing element (9) bears against a bed-frame bearing surface (15) of a bed frame (2) of the bunk (1) by means of a securing-element bearing surface (13, 14) in a planar bearing connection, and is secured there such that the securing element (9) is supported in a planar manner against the bed frame (2) when subjected to a force.

2. Bunk according to Claim 1, **characterized in that** the securing element (9) engages in a form-fitting manner at least in regions around the bed frame (2).

3. Bunk according to Claim 2, **characterized in that** the securing element (9) engages around the bed frame (2) in a U-shaped manner.

4. Bunk according to Claim 3, **characterized in that** the U base and/or the U limbs (16, 20), with the side thereof which is assigned to the bed frame (2), forms or form the securing-element bearing surface (13, 14).

5. Bunk according to Claim 3 or Claim 4, **characterized in that** the securing element (9) is connected to the bed frame (2) in the region of at least one U limb (16).

6. Bunk according to Claim 5, **characterized in that** one or both U limbs (16, 20) is or are connected to the bed frame (2) by means of a tongue-and-groove connection (18), and/or one or both U limbs (16, 20) is or are connected to the bed frame (2) by means of a screw connection and/or split-pin connection and/or latching connection (21).

7. Bunk according to Claim 6, **characterized in that**, at the bed frame end which is at the top in the fitted state of the bed frame (2), a tongue-and-groove connection (18) is provided between the bed frame (2) and an upper U limb (16), which is assigned to said top bed frame end, in such a manner that the upper U limb (16), which has a preferably outwardly rounded latching hook (17) at the free U limb end, engages, in particular engages in a form-fitting manner, with said latching hook (17) in a latching groove (19) on the bed frame side.

8. Bunk according to Claim 6 or Claim 7, **characterized in that**, at the bed frame end which is at the bottom in the fitted state of the bed frame (2), a releasable screw connection (21) or securing split-pin connection or latching connection is provided between the bed frame (2) and a lower U limb (20), which is assigned to said lower bed frame end, the lower U limb (20) bearing in a form-fitting and planar manner against the lower bed frame end.

9. Bunk according to one of Claims 1 to 8, **characterized in that**, in the fitted state, the securing element bears with an upper and lower bearing surface (13, 14), as seen in the direction of the vertical axis, in a planar manner against the bed frame (2), and **in that** the two bearing surfaces (13, 14) on the securing-element side are spaced apart from each other in the direction of the vertical axis such that the lower bearing surface (14) substantially engages in a form-fitting manner around a corner edge region of the bed frame, which region is at the bottom in the direction of the vertical axis, while the upper bearing surface (13) is preferably substantially supported in a planar manner on a vertical side wall as the bearing surface of the bed frame (2).

10. Bunk according to Claim 9, **characterized in that** the gap spacing between the upper and lower bearing surfaces (13, 14) is formed by a cutout on the securing-element side.

11. Bunk according to one of Claims 1 to 10, **characterized in that** the securing element (9) is of multipart design and has at least one retaining profile (10), which can be connected to the bed frame (2) by the planar bearing connection, and a securing clip (11) which can be connected to the retaining profile (10).

12. Bunk according to Claim 11, **characterized in that** the retaining profile (10) has a U-shaped cross section in which the securing clip (11) is accommodated in a releasably secured manner, in particular by a form-fitting sliding guide.

13. Bunk according to Claim 12, **characterized in that** the outer wall of the retaining-profile U limb, which is assigned to the bed frame (2) in the fitted state of the retaining profile (10), forms the safety-element bearing surface, and **in that** at least part of the inner walls of the retaining profile (10) has latching and/or frictional and/or form-fitting elements (25, 28, 29) by means of which the safety clip (11) is accommodated and secured in the retaining profile (10) in a latchable and/or frictional and/or form-fitting manner.

14. Bunk according to Claim 13, **characterized in that** dovetail guides and/or tongue-and-groove connections are provided for the securing and for the insertion of the securing clip (11).

15. Bunk according to one of Claims 11 to 14, **characterized in that** means are provided, by means of which the securing clip (11) is secured against displacement in the longitudinal and/or in the axial directions, in particular by means of stops and/or fastening means.

16. Bunk according to one of Claims 11 to 15, **characterized in that** the securing clip (11) has a U shape and is accommodated with the two free U limb ends (30, 31) in the retaining profile (10).

17. Bunk according to Claim 15 or Claim 16, **characterized in that** the retaining profile (10) is designed to be open on one or both sides for the securing clip (11) to be inserted on the end side, the open end side preferably being closable in a releasable manner by means of a covering element (32).

18. Bunk according to one of Claims 1 to 17, **characterized in that** the securing element (9) extends approximately over half to a quarter of the entire length of the associated bed frame region (5).

19. Bunk according to one of Claims 1 to 18, **characterized in that** the bed frame (2) is formed by a profile frame, and the region assigned to the securing element is formed by a front frame profile (5) facing the passenger compartment.

20. Bunk according to one of Claims 1 to 19, **characterized in that** the securing element (9) and/or the bed frame (2) are/is produced from light metal or plastic, in particular by injection molding.

## Revendications

1. Couchage pour une cabine de véhicule utilitaire comprenant un dispositif de sécurité, qui dispose d'un élément de sécurité pouvant être disposé sur le couchage, qui constitue, dans sa position d'utilisation, une protection de retenue et/ou contre les chutes, pour des personnes ou des objets se trouvant sur le couchage,
**caractérisé en ce que**
l'élément de sécurité (9) s'applique avec une surface d'appui d'élément de sécurité (13, 14) dans une connexion d'appui plane contre une surface d'appui de cadre de lit (15) d'un cadre de lit (2) du couchage (1) et y est fixé, de sorte que l'élément de sécurité (9) s'appuie à plat contre le cadre de lit (2) dans le cas d'une sollicitation par force.

2. Couchage selon la revendication 1, **caractérisé en ce que** l'élément de sécurité (9) vient en prise autour du cadre de lit (2) au moins en partie par engagement par correspondance géométrique.

3. Couchage selon la revendication 2, **caractérisé en ce que** l'élément de sécurité (9) vient en prise autour du cadre de lit (2) en forme de U.

4. Couchage selon la revendication 3, **caractérisé en ce que** la base du U et/ou les branches du U (16, 20) constitue(nt) avec leur côté associé au cadre de lit (2) la surface d'appui de l'élément de sécurité (13, 14).

5. Couchage selon la revendication 3 ou la revendication 4, **caractérisé en ce que** l'élément de sécurité (9) est connecté au cadre de lit (2) dans la région d'au moins une branche du U (16).

6. Couchage selon la revendication 5, **caractérisé en ce que** l'une ou les deux branches du U (16, 20) sont connectées au cadre de lit (2) au moyen d'une connexion à rainure et languette (18) et/ou **en ce que** l'une ou les deux branches du U (16, 20) sont connectées au cadre de lit (2) au moyen d'une connexion par vissage et/ou par goupille et/ou par encliquetage (21).

7. Couchage selon la revendication 6, **caractérisé en ce qu'**à l'extrémité du cadre de lit supérieure dans l'état monté du cadre de lit (2) est prévue une connexion à rainure et languette (18) entre le cadre de lit (2) et une branche du U supérieure (16) associée à cette extrémité supérieure du cadre de lit, de telle sorte
que la branche du U supérieure (16), présentant à l'extrémité libre de la branche du U un crochet d'encliquetage (17) de préférence arrondi vers l'extérieur, vient en prise avec ce crochet d'encliquetage (17) dans une rainure d'encliquetage (19) du côté du cadre de lit, notamment par engagement par correspondance géométrique.

8. Couchage selon la revendication 6 ou la revendication 7, **caractérisé en ce qu'**à l'extrémité du cadre de lit inférieure dans l'état monté du cadre de lit (2) est prévue une connexion vissée (21) détachable ou une connexion par goupille de fixation ou une connexion par encliquetage entre le cadre de lit (2) et une branche du U inférieure (20) associée à cette extrémité inférieure du cadre de lit, la branche du U inférieure (20) s'appliquant par engagement par correspondance géométrique et à plat contre l'extrémité inférieure du cadre de lit.

9. Couchage selon l'une quelconque des revendications 1 à 8, **caractérisé en ce que** l'élément de sécurité, dans l'état monté, s'applique à plat sur le cadre de lit (2) avec une surface d'appui (13, 14) supérieure et inférieure, vue dans la direction de l'axe vertical,
**en ce que** les deux surfaces d'appui (13, 14) du côté de l'élément de sécurité sont espacées l'une de l'autre dans la direction de l'axe vertical de telle sorte
que la surface d'appui inférieure (14) vienne en prise par engagement par correspondance géométrique essentiellement autour d'une région de bord de coin inférieure du cadre de lit, dans la direction de l'axe vertical, tandis que la surface d'appui supérieure (13) s'appuie à plat de préférence essentiellement contre une paroi latérale verticale servant de surface d'appui du cadre de lit (2).

10. Couchage selon la revendication 9, **caractérisé en ce que** la distance de la fente entre la surface d'appui supérieure et inférieure (13, 14) est formée par un évidement du côté de l'élément de sécurité.

11. Couchage selon l'une quelconque des revendications 1 à 10, **caractérisé en ce que** l'élément de sécurité (9) est réalisé en plusieurs parties et présente au moins un profilé de retenue (10) pouvant être connecté au cadre de lit (2) à la connexion d'appui plane, ainsi qu'un étrier de sécurité (11) pouvant être connecté au profilé de retenue (10).

12. Couchage selon la revendication 11, **caractérisé en ce que** le profilé de retenue (10) présente une section transversale en forme de U, dans laquelle l'étrier de sécurité (11) est retenu de manière détachable, notamment est reçu par engagement par correspondance géométrique avec un guide à coulisse.

13. Couchage selon la revendication 12, **caractérisé en ce que** la branche du U du profilé de retenue associée dans l'état monté du profilé de retenue (10) au cadre de lit (2) constitue sur sa paroi extérieure la surface d'appui de l'élément de sécurité, et
**en ce que** le profilé de retenue (10) présente, sur au moins une partie de ses parois intérieures, des éléments d'encliquetage et/ou d'engagement par force et/ou par engagement par correspondance géométrique (25, 28, 29), au moyen desquels l'étrier de sécurité (11) peut être encliqueté et/ou reçu par engagement par force et/ou par engagement par correspondance géométrique et fixé dans le profilé de retenue (10).

14. Couchage selon la revendication 13, **caractérisé en ce que** des guides en queue d'aronde et/ou des connexions à rainure et languette sont prévus pour retenir et enfoncer l'étrier de sécurité (11).

15. Couchage selon l'une quelconque des revendications 11 à 14, **caractérisé en ce que** des moyens sont prévus, lesquels permettent de fixer l'étrier de sécurité (11) contre tout déplacement dans la direction longitudinale et/ou axiale, notamment par des butées et/ou des moyens de fixation.

16. Couchage selon l'une quelconque des revendications 11 à 15, **caractérisé en ce que** l'étrier de sécurité (11) présente une forme en U et est reçu avec les deux extrémités libres des branches du U (30, 31) dans le profilé de retenue (10).

17. Couchage selon la revendication 15 ou la revendication 16, **caractérisé en ce que** le profilé de retenue (10) est réalisé de manière ouverte d'un côté ou des deux côtés, pour l'enfoncement du côté frontal de l'étrier de sécurité (11), le côté frontal ouvert pouvant de préférence être fermé de manière détachable au moyen d'un élément de recouvrement (32).

18. Couchage selon l'une quelconque des revendications 1 à 17, **caractérisé en ce que** l'élément de sécurité (9) s'étend approximativement sur la moitié jusqu'à un quart de la longueur totale de la région de cadre de lit (5) associée.

19. Couchage selon l'une quelconque des revendications 1 à 18, **caractérisé en ce que** le cadre de lit (2) est réalisé par un cadre profilé et la région associée à l'élément de sécurité est formée par un profilé de cadre avant (5) tourné vers l'habitacle de conduite.

20. Couchage selon l'une quelconque des revendications 1 à 19, **caractérisé en ce que** l'élément de sécurité (9) et/ou le cadre de lit (2) sont fabriqués en métal léger ou en plastique, notamment par un procédé de moulage par injection.
